# EUROPEAN PATENT APPLICATION

(11) **EP 2 034 381 A1**
(43) Date of publication of application: **11.03.2009**
(21) Application number: 08163217.6
(22) Date of filing: 28.08.2008
(51) Int. Cl.: G05F 3/30

(54) **Temperature sensitive circuit**

(30) Priority: 03.09.2007 GB 0717012
(71) Applicant: Adaptalog Limited, Saffron Walden CB10 3RY (GB)
(72) Inventor: Rokos, George Hedley Storm, Saffron Walden, Essex CB10 3RY (GB)
(74) Representative: Messulam, Alec Moses

(57) **Abstract**

A circuit for use in a current source or a proportional to absolute temperature sensor or in a bandgap regulator, the circuit comprising at least two PTAT cells the operating Voltages of whose components overlap, the PTAT contribution to the output including the sum of the outputs of the two PTAT cells.

## Description

### Field of the invention

The present invention relates to a temperature sensor, in particular to a temperature sensor that develops a Voltage that is proportional to absolute temperature. The invention equally relates to the provision of a bandgap voltage reference circuit.

### Background of the invention

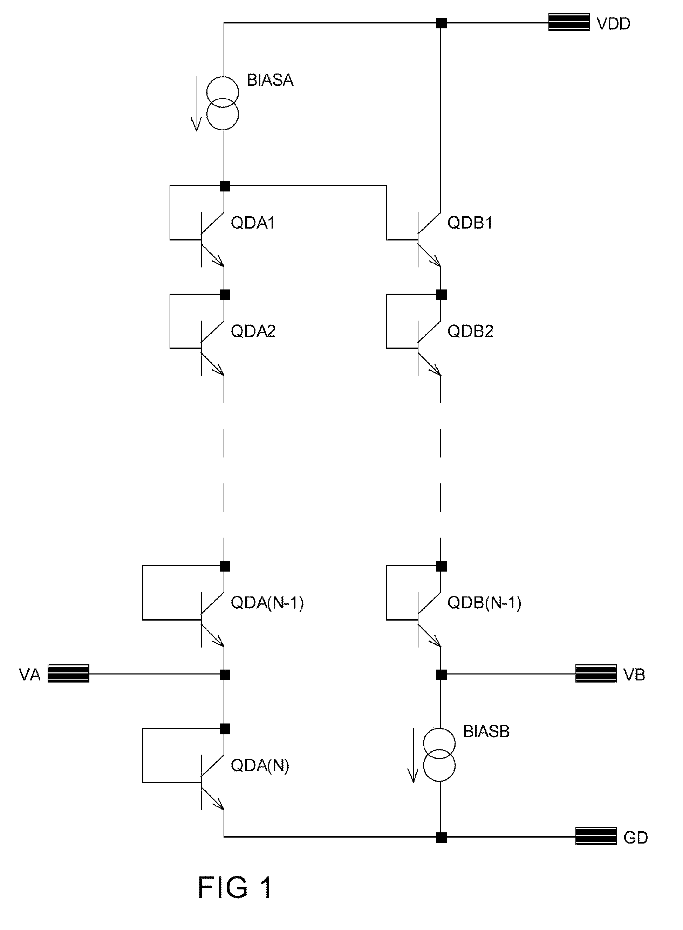

The earliest known bandgap regulator was designed by Hilbiber in about 1964, and described in US 3,271,660. This consisted of two stacks of transistors, each arranged to provide a diode-equivalent Voltage level shift (herein referred to as "Diodes") as shown in the appended Figure 1. The first stack comprised a number of Diodes QDA1 ... QDA(N) connected in series and forward biased, and the other comprised one fewer Diodes QDB1 ... QDB(N-1) connected in series and forward biased; the positive ends of each series-connected group were joined. The difference in the effective current densities in the Diodes QDB(1) ... QDB(N-1) in the second group and the corresponding Diodes QDA(1) ... QDA(N-1) at the higher effective current density in the first group produced a differential Voltage (VB-VA) of about 600-mV at room temperature, with an approximately Proportional-to-Absolute-Temperature or PTAT characteristic that largely compensated the temperature coefficient of the additional Diode QDA(N) in the first stack. The temperature-stabilised output Voltage was taken between the lowest-potential points in each of the Diode stacks (i.e. VB and GD). This arrangement was originally proposed in order to provide a level of stability that was not available from the Zener diodes of the time, but Hilbiber's use of transistors of different construction to provide the diode function for each of the two chains meant that different batches required substantially different bias conditions to provide a zero temperature coefficient. In addition, the relatively high supply Voltages that were required to bias such a system proved problematic in many applications. Clearly, Hilbiber recognised that bipolar transistors gave excellent performance when used as diodes; he also suspected that the output Voltage was related to the bandgap of silicon, but the difference between the types of the diodes apparently prevented him from proving the latter.

Some six years later Widlar designed the LM113 integrated bandgap regulator using techniques outlined in US 3,617,859 by Widlar and Dobkin and illustrated in the appended Figure 2. This used transistors QD and QW of similar construction but with different actual areas QW > QD to generate a PTAT Voltage. At the same time, they developed this Voltage across a reference resistor RW so as to develop a reference current that they could pass through another higher value resistor RP to develop a Voltage that was a multiple of the initial PTAT Voltage. In addition, they used feedback to control the bias conditions. In this way, they were able to generate a bandgap reference that could be supplied from a potential source that was only slightly higher than the required output potential. This provided the first practical temperature-stable integrated semiconductor regulator that would operate from a supply voltage of less than 4 Volts.

Analysis of the noise in the arrangements of Hilbiber and of Widlar and Dobkin respectively shows that, for a given current dissipation and effective current density ratio, the noise of the later arrangement is higher than the earlier. Some of this is to be expected purely because of the reduction in supply and corresponding dissipation. There is, however, some additional noise due to the gain in the feedback circuit. More significantly however, at a given current, the noise voltage generated in a resistor is proportional to the square root of the Voltage across the resistor. In addition, a resistor's noise contribution is 3dB higher than the noise of a diode or transistor with equivalent dynamic resistance. As a result, the resistors in Widlar and Dobkin's arrangement generate about 10dB more noise than the bipolar transistors. The difference is even more marked for circuits designed using modern processes where the PTAT Voltage generated can be larger. Nevertheless, nearly all available integrated circuit bandgap regulators have followed Widlar and Dobkin's lead, and depend on resistor feedback networks to multiply the PTAT Voltage (that is generated by the current density differences in the Diodes) to a level that provides compensation for the negative temperature coefficient of the circuit diodes.

Another well known configuration which should be mentioned for completeness is described in US 3,887,863, which for convenience is imported herein by reference, and will be referred to below as the Brokaw arrangement. While the Brokaw arrangement provides some structural flexibility for some applications, its intrinsic noise performance is very similar.

Recently, in UK patent application 0705868.8, the Applicant proposed PTAT generation circuits that, in spite of using resistor feedback networks to multiply the PTAT Voltage, provide theoretical improvements over the prior art PTAT generators that use resistor-stabilised amplification that is in the order of 5.4 dB. In practice, the improvement is rather greater than this, because these circuits require minimal external support circuitry. However, nearly 3 dB of the benefit is due to the use of complementary transistors, which means that the circuits are not suitable for use with standard CMOS processes. In addition, although the sensitivity of these circuits to flicker noise in the transistors' base currents is reduced compared to the earlier circuits, it remains significant.

Prior art PTAT arrangements that are suitable for bandgap use include circuits that can operate from a low supply Voltage (e.g. Widlar and Dobkin, Brokaw, Rokos), or that can provide noise that is limited by the noise mechanisms in the Transistors (Hilbiber), or that use a single polarity device (Widlar and Dobkin, Hilbiber, Brokaw, Rokos). However, none of these can meet all three of these conditions simultaneously.

### Object of the invention

It is an object of this invention to provide low-noise performance where the noise is determined primarily by the noise mechanisms in the Transistors.

### Summary of the invention

According to the present invention, there is provided a circuit for use in a Voltage source or a proportional to absolute temperature sensor or in a bandgap regulator, the circuit comprising a first PTAT Voltage source comprising at least a first Transistor and a second Transistor that is operated at a Current Density that is low compared with the Current Density in the first Transistor, the first and second Transistors being connected so that the difference between the Base-to-Emitter potential differences of the said transistors comprises at least part of the first PTAT Voltage, and a second PTAT source comprising at least a third Transistor and a fourth Transistor that is operated at a Current Density that is low compared with the Current Density in the third Transistor, the third and fourth Transistors being connected so that the difference between the Base-to-Emitter potential differences of the said transistors comprises at least part of the second PTAT Voltage, the first and second PTAT Voltage sources being interconnected such that a Voltage signal is generated that comprises the sum of the PTAT Voltages generated by the two PTAT sources, wherein the potential of either the Emitter or the Base of the third or fourth Transistor lies between the potentials of the Emitter and the Base of the first Transistor.

It may be that the first and second PTAT Voltages referenced above are physically connected directly in series. Alternatively, there may be an additional diode level shift or shifts interposed as part of a band-gap generator.

Because the Base or Emitter of the third or fourth transistor in the present invention lies at a potential between (but not equal to) those of the Emitter and Base electrodes of the first Transistor, i.e. the operating voltages of the two transistor overlap, it is possible to achieve a higher PTAT voltage for a given power supply without resorting to amplification that requires the use of noisy resistive components to define the voltage gain.

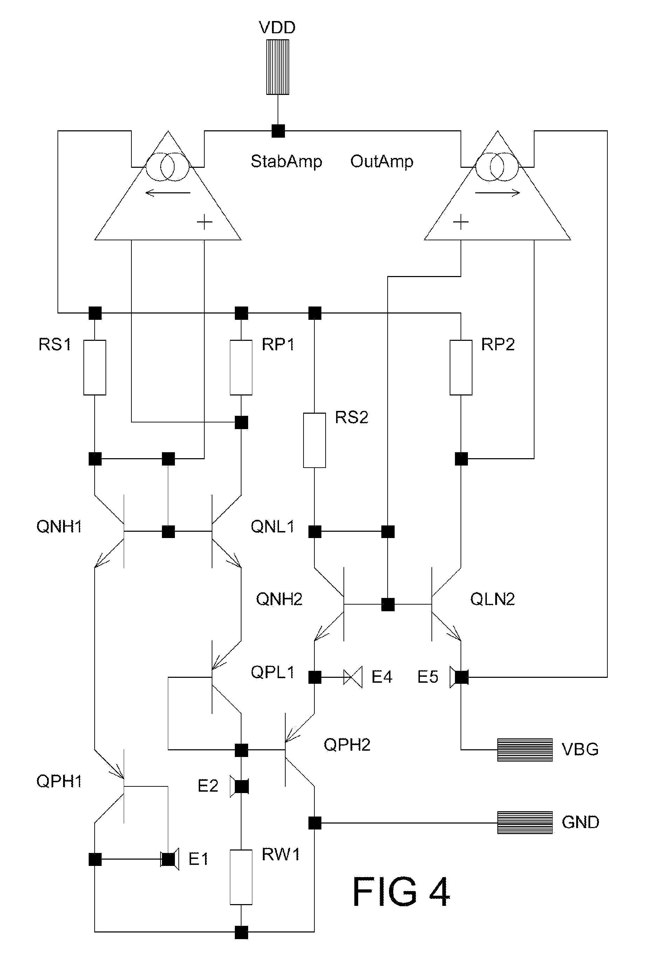

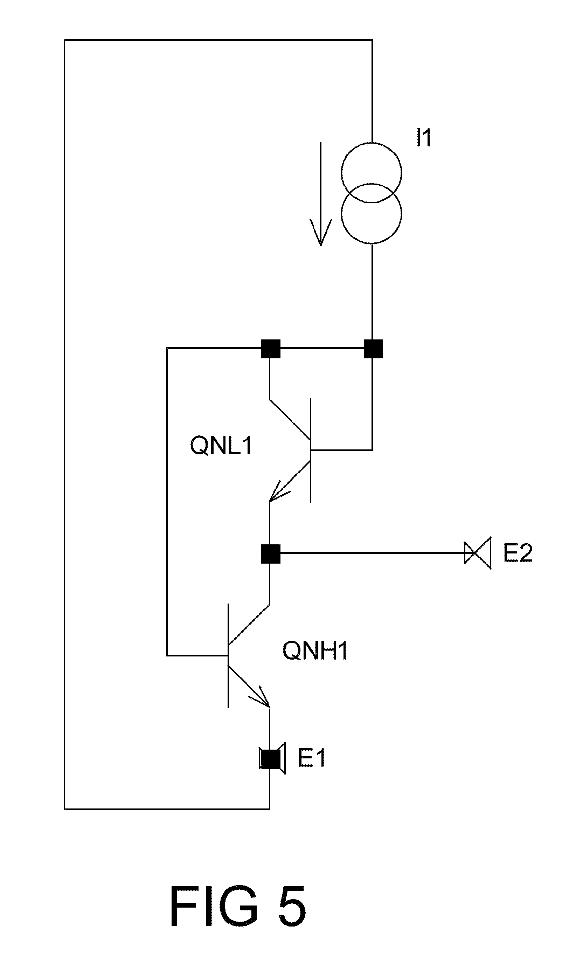

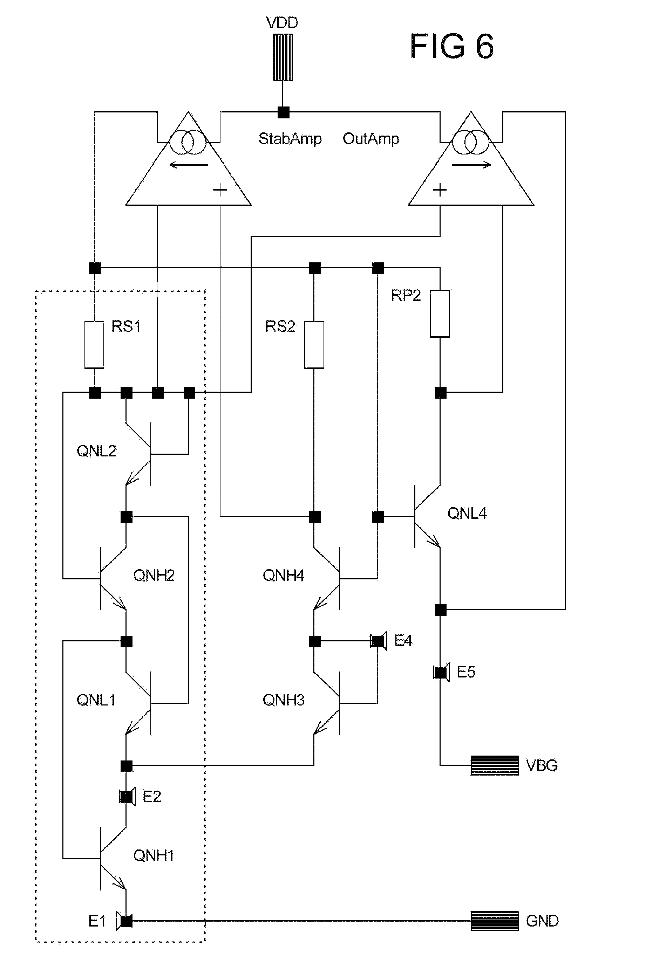

In one preferred embodiment, the Collector current of at least one of the Transistors that is operated at high Current Density forms at least part of the Emitter current of a Transistor that is operated at low Current Density; the simplest basis for this arrangement is shown in figure 5, though a single pair of this nature does not form part of this invention and would have little practical application. An arrangement with two pairs of Transistors (QNH1/QNL1 and QNH2/QNL2) in one chain and one pair in another (QNH4 and QNL4) sharing current is shown in figure 6. This arrangement is essentially similar to the arrangement of figure 4, except that sharing the currents provides a number of benefits - it reduces the total current required, increases the absolute current in QNH1, which both reduces the noise and increases the current density, and reduces the 1/f noise contribution of the individual base currents. A limitation of this arrangement is the maximum practical PTAT Voltage that this arrangement can accommodate in a single chain before the low Current Density Transistor whose Emitter is one of the terminals of the relevant PTAT Voltage saturates at high temperatures. However, for Voltage references and regulators this limitation can usually be overcome by stacking reference stages each of which provides a reference equivalent to one-or-two bandgaps - and that can use the same current.

### Brief description of the drawings

The invention will now be described further, by way of example, with reference to the accompanying drawings, in which :-
Figures 1 and 2 show known PTAT voltage sources as referred to above,
Figures 3 and 4 are circuit diagrams of embodiments of the invention,
Figure 5 shows a PTAT primitive cell that may form part of a circuit embodying the invention, and
Figures 6 to 14 show circuit diagrams of still further embodiments of the invention.

Before describing the preferred embodiments of the invention in detail, it is important to provide some clarification as to the precise intended meaning of some of the terms which are to be used.

### Definitions

Some definitions of the terms used in the present specification will be set out below, while others will be given in the relevant sections of the text where they first occur.

In line with earlier generic patents, all illustrations show PTAT arrangements using bipolar transistors; however, this is not to be seen as restricting the application to bipolar implementations. For example, field effect transistors (FETs) in weak inversion also provide PTAT characteristics, and FETs in strong inversion provide a usefully controlled output current using the same techniques, even though the drain current does not depend exponentially on the gate-to-source potential; accordingly, the term transistor ("Transistor") is to be taken to mean any electronic device which provides characteristics for which the techniques herein described provide a useful current source or voltage reference or regulator, and emitter ("Emitter") and base ("Base") refer to the control terminals of any such device for which the output current flowing between the Emitter and the Base or a third terminal referred to as the "Collector" depends in operation primarily on the potential difference between the control terminals, with the current passing through the Base (the "Base Current") being substantially smaller than the similarly defined "Emitter Current" and "Collector Current". The term Base-Emitter Voltage refers to the potential difference between the Base terminal and the Emitter terminal. In the same vein, the term "PTAT" is used to apply to the current-generation or Voltage-generation arrangements, regardless of whether the control potentials or the output currents are PTAT in practice.

Where it is practical for a diode to replace a Transistor, the term Transistor will be used to include the use of such a diode. This can of course include bipolar transistors, H-JFETs and MOSFETs in their diode connections, as well as junction diodes and Schottky diodes, for example.

The term "Beta" is used to denote the quotient IC/IB of the Collector Current (IC) and the Base Current (IB) regardless of the type of Transistor in use.

The Transistor polarity refers to whether the normal behaviour more closely resembles a PNP or an NPN transistor, these two being referred as being of opposite polarity or as being complementary.

The techniques described herein are most widely understood when used with devices where the current under identical bias voltage conditions depends substantially linearly on a physical area. This is typically the case for traditional vertical bipolar transistors, where the relevant area is the physical area of the emitter junction. However, the equivalent parameter for FETs would be the quotient width/length, where the width of the FET is the effective gate dimension in the direction perpendicular to the current flow, and the length is the effective gate dimension along the direction of current flow. The same criterion would apply to lateral bipolar transistors where the physical depth of the active base region is independent of the lateral dimensions, as is broadly the case for many lateral PNP transistors whose base is defined by a MOSFET gate. Similarly, as observed by Hilbiber, vertical bipolar transistors of substantially different construction can provide characteristics that are suitable for use in such circuits. Accordingly, the terms "Effective Area", "Area Ratio", and "Relative Area" are to be taken hereafter to indicate the relationship between the currents of such devices when operated under identical conditions, rather than to the physical areas of the devices. Similarly, the term "Current Density" refers to the current relative to the Effective Area, rather than to any specific physical area.

The term resistor ("Resistor") is used to describe a circuit element or elements that display at least approximately Ohmic behaviour. It may be an individual resistor structure, or part or all of a network. Specifically, a number of resistors of equivalent function may be merged into a single structure, so a defined Resistor may not provide external terminals that correspond to the defined potentials. Similarly, a field effect transistor ("FET") or network of FETs operating in a mode that serves the same purpose as a resistor or resistor network would be classified as a Resistor.

### Detailed description of the preferred embodiment(s)

All the circuit diagrams in the drawings use conventional notation for components such as transistors, resistors and current supplies and the manner in which the various individual components are interconnected will be assumed to be the same as shown in the drawings. In the interest of clarity and conciseness, no verbal description of the interconnections will be repeated in the text below.

Figure 1 shows the earliest bandgap arrangement due to Hilbiber. Using compact modern IC Transistors would allow an Area Ratio of at least 1:100 for the QDA Transistors relative to the QDB transistors, and this would require N=5, i.e. a total of 9 Transistors in order for the output to be at the bandgap potential. The minimum supply would therefore be about 4.5 Volts - considerably lower than would have been practical when Hilbiber designed the original reference. The noise levels may be reduced by using fewer stages. It may even be practical to increase the Area Ratio to 1:220, which would reduce the transistor numbers to 7 and the required a supply to 3.6 Volts.

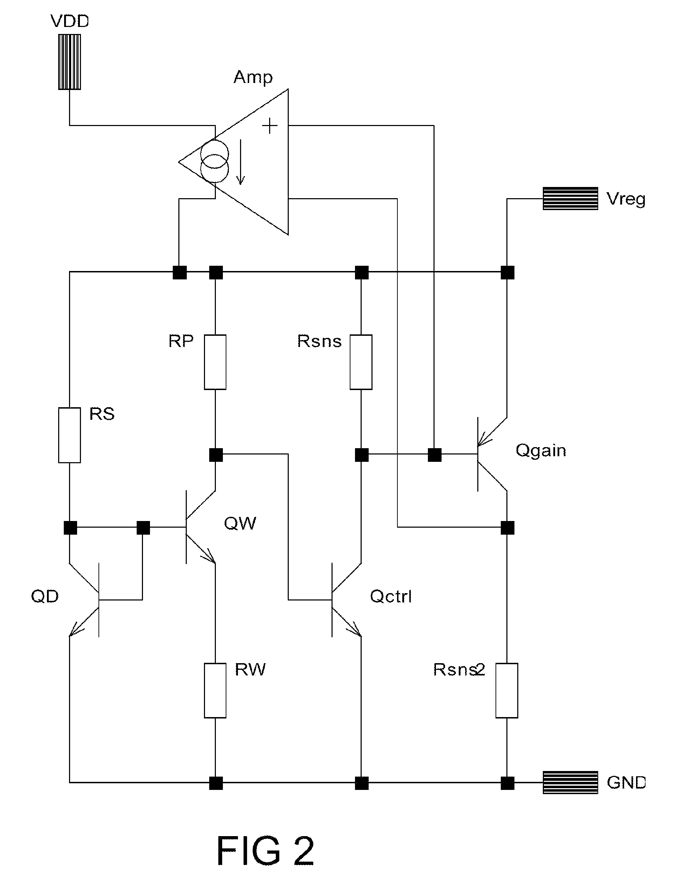

Figure 2 shows the Widlar and Dobkin circuit. Widlar and Dobkin used an area ratio of Transistor QD to Transistor QW of about 1:10, which would have generated a potential difference of about 60 mV across RW at normal temperatures (25°C). This would have been multiplied in RP to provide a PTAT voltage of about 500 mV; the dominant noise would have been due to resistor RW. An arrangement using modern devices would use much larger ratios, and generate at least 120 mV across RW; the relative contribution from the transistors would fall, so the dominant contribution would still be from RW, possibly followed by RP. Putting some numbers to this, we note at this point that the noise generated by RW with 120 mV across it is more than 6 dB greater than the sum of the noise generated in QD and QW if they are operated at the same current, and this is what will dominate the output noise which should be due primarily to the noise current in RP. Using modern devices, if we set the dissipation in sections that incorporate just QD and QW to be equal to those involving the QDA and QDB Transistors of Figure 1 to be equal, the output noise of the reference of Figure 2 will be about 8 dB higher than that of Figure 1.

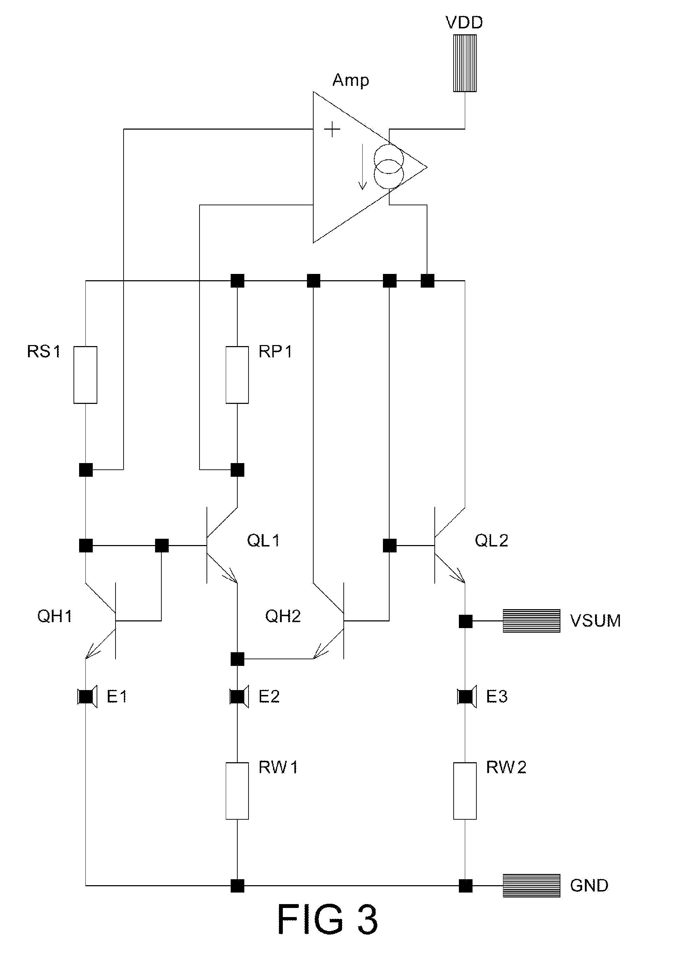

Figure 3 shows an arrangement for generating a PTAT Voltage according to the present invention. It is essentially a folded rearrangement of a PTAT section of Hilbiber's reference. The area of Transistor QL1 is typically much greater than the area of QH1. The difference in current densities so caused will result in a PTAT potential difference appearing between E2 and E1. Similarly, the area of Transistor QL2 will be much greater than that of Transistor QH2, resulting in the generation of a PTAT potential difference between E3 and E2. The potential difference between E3 and E1 will clearly be the sum of the differences E2 to E1 and E3 to E2. These potential differences will each typically be of the order of 100-mV at 25°C, and the noise levels will be dominated by the transistor noise. Of course, this minimal arrangement will not currently generate sufficient PTAT potential to allow a bandgap potential to be generated merely by the addition of a further diode.

Figure 4 shows another folded arrangement that uses complementary Transistors to provide buffering that reduces the interaction between the currents in successive folds. The advantage of the buffering is that it further reduces sensitivity to resistor mismatch and noise. The disadvantage is that it increases the sensitivity to 1/f noise in the base current, albeit to a lesser level than in the arrangements of Widlar and Dobkin or of Brokaw. This arrangement as shown is suitable to provide a Bandgap output that is temperature-stable to first order. With typical present generation Transistors, this would require (geometric) mean ratios of Current Density between those that are biased at high Current Density (Q*H*, where the * can be replaced by any character) and those that are biased at low Current Density (Q*L*) that is in the order of 170:1. The current density may be achieved using similar levels of current in (for example) QNH1 and QNL1, or the ratios between the currents may be adjusted for a desired compromise between minimum noise and acceptable transistor area. It may be seen that second-order correction of the temperature performance of this and related band-gap circuits can be attained by the simple expedient of increasing the relative temperature coefficient of the currents in the Transistors that are operated at high current density, for example by connecting Resistors between the base of at least one of QNH1 or QNH2 and the terminal marked GND. It is noted in passing that this particular arrangement is not suitable for a reference or a regulator that requires a low drop-out Voltage (i.e. the voltage between the supply voltage and the bandgap output). A standard start-up circuit that draws its starting current from RW1 would be suitable for use with this bandgap.

In one preferred embodiment, at least part of the Collector current of at least one of the Transistors that is operated at high Current Density forms at least a substantial part of the Emitter current of a Transistor that is operated at low Current Density. The simplest basis for this arrangement is shown in Figure 5. This figure shows a minimal PTAT cell (not in itself alone in accordance with the invention) where the same current passes through the Collector of Transistor QNH1 that is operated at high Current Density and the Emitter of Transistor QNL1 that is operated at low Current Density. The PTAT potential appears between E1 and E2. Clearly, the reuse of current has advantages in terms of dissipation for a particular noise requirement. Reuse of the current also causes the mean value of the output Voltage to be essentially independent of the bias current I1. This will significantly attenuate the effect of noise and errors in the bias current and may also simplify the adjustment of bias current to achieve optimum noise performance. The arrangement and its derivatives are relatively insensitive to the 1/f noise in the Base current.

Figure 6 shows a single height band-gap arrangement that incorporates a single transistor chain based on the PTAT circuit of Figure 5. The components shown within the box drawn in broken lines form a circuit embodying the invention which may be considered as two of the circuits of Figure 5 stacked above one another with the base potential of the transistor QNL1 lying between the potentials of the emitter and the base of the transistor QNH2.

The current in the collector of Transistor QNH1 is essentially the sum of the currents in RS1 and in RS2. This relative increase in current reduces the mid-band noise generated in Transistor QNH1, and also increases its Current Density, which can reduce the total transistor area required. Second-order curvature of the Voltage-temperature characteristic of the bandgap can be compensated by connecting a Resistor between the Collector terminal of QNH4 and either terminal E2 or GND, for example. This arrangement can be used in similar applications to that of Figure 4.

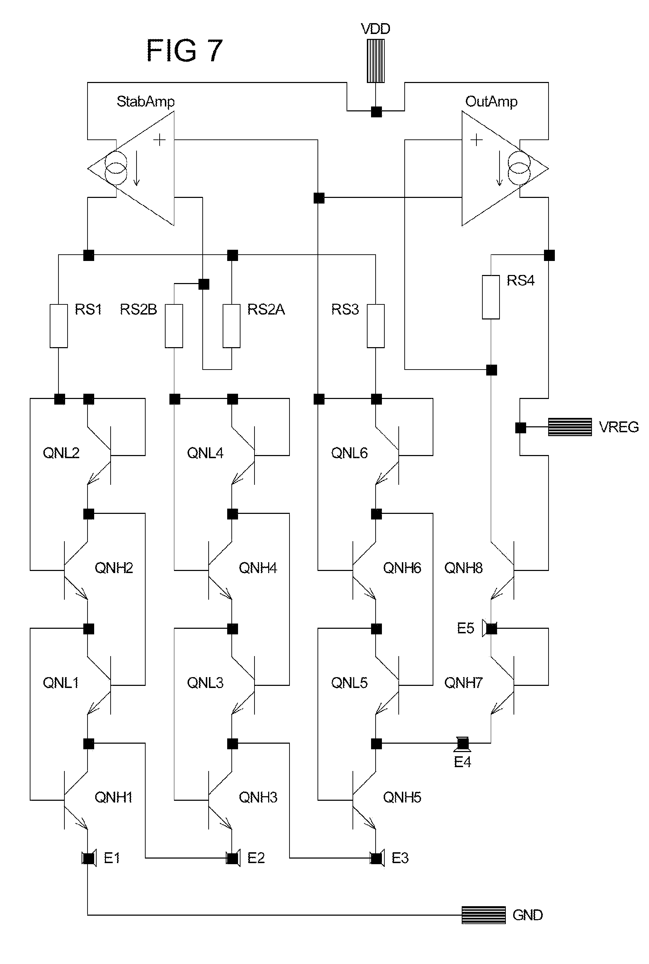

Figure 7 shows an arrangement that would be suitable for a 2-bandgap high reference or regulator that is required to function with minimal drop-out voltage. In other respects this circuit shares many of the characteristics of the circuit of Figure 6. Bandgap curvature may be compensated by connecting a Resistor between the Collector of QNH4 and the terminal E4 or Ground, for example. The trade-off between output noise and dissipation is readily adjusted by trimming the Resistors in similar proportions; the output Voltage should be relatively insensitive to the values of RS1, RS2, and RS3 provided they change in proportion, but changing RS4 will naturally affect the forward Voltage of the Transistors QNH7 and QNH8. The output Voltage may be trimmed to its intended value by modifying the relationship between the currents in the chains - relative increases in the currents in RS3 and RS4 will serve to increase the output Voltage (and also the linear temperature coefficient), whereas relative increases in the currents in RS1 and RS2 will tend to reduce the output Voltage. Alternatively, the output Voltage may be trimmed by connecting additional Transistors in parallel with existing Transistors so as to modify the Effective Areas.

Standard methods for driving start-up may be implemented if a Resistor is added between (say) E4 and ground, and this could be switched out of operation whenever the output Voltage is above some safe level.

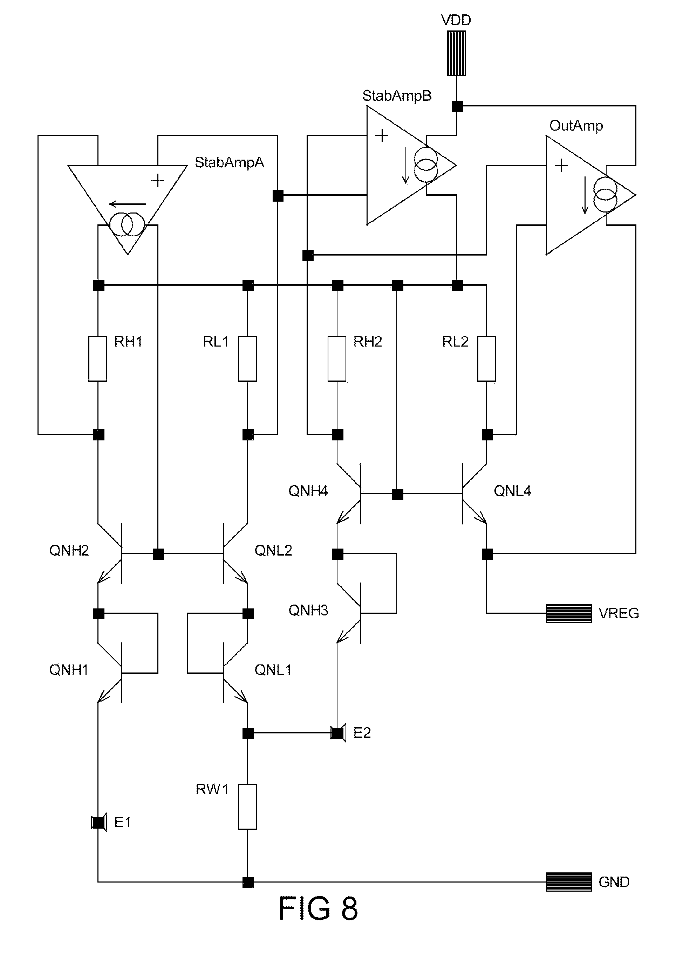

Figure 8 shows a circuit using Transistors of a single Polarity that is otherwise generally equivalent to the circuit of Figure 4 that uses Complementary Transistors in each of the buffer chains.

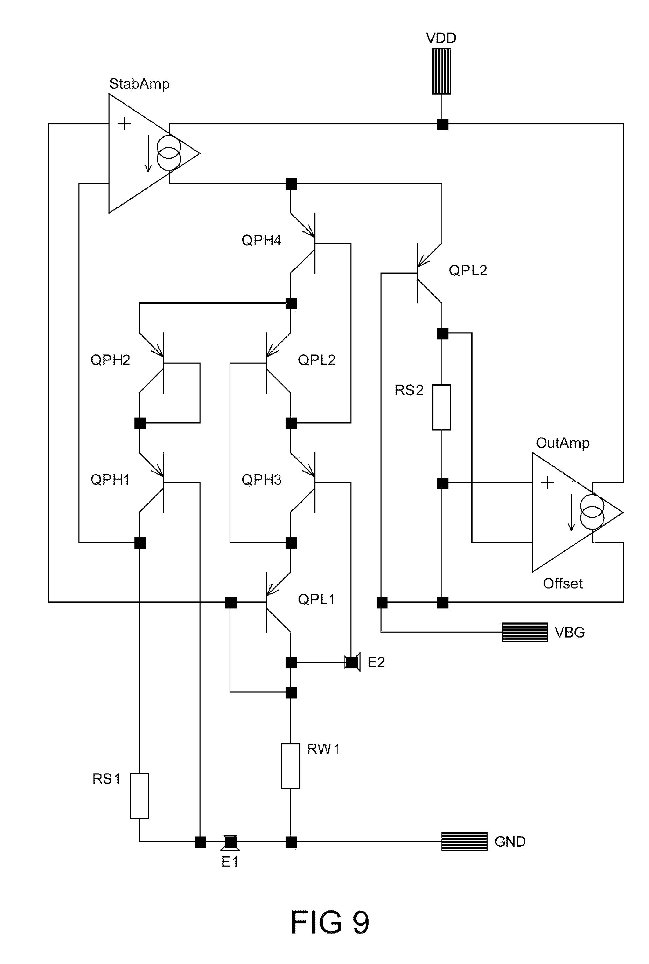

In a preferred embodiment, the Transistors that comprise the bandgap are intrinsic to a standard CMOS process. Figure 9 shows an arrangement using only PNP Transistors to generate a regulated output at about one bandgap potential above circuit reference. Most of the schematic is self-explanatory, but it should be noted that in this arrangement the Voltage across RS2 is defined by the designed input offset Voltage of OutAmp, the amplifier that provides current to the load. This is an example of an arrangement that would be suitable to generate a bandgap in many standard CMOS processes, using for example the lateral PNP transistor that is always available in such a process. Note however that, even in this case, there may be advantage in using modifying the control arrangements so that a different Diode type can be used for QPH1 to provide increased VBE at the available current level. Where primarily lateral transistors without buried layers are used, currents flowing between the Emitters of the Transistors and the substrate would progressively reduce the current through the lower-potential Transistors in each chain, but the noise levels would still be appreciably lower than for stages using prior art. This arrangement is not immediately suited to low-drop-out arrangements.

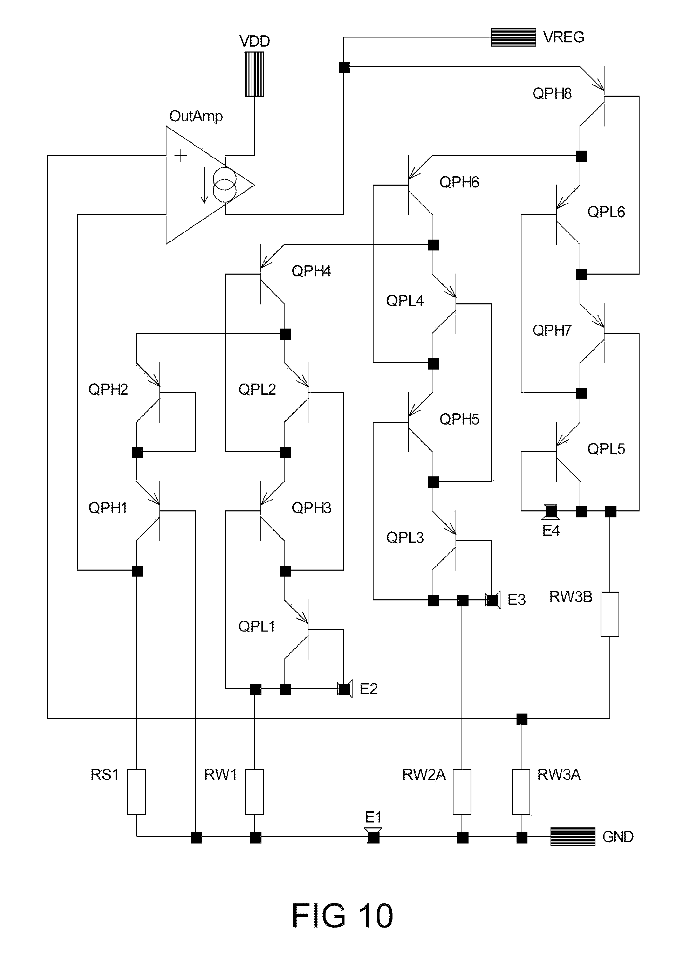

Figure 10 shows an arrangement that uses only PNP Transistors that is suitable to generate a low-dropout regulator with an output that is two bandgap potentials above the local ground reference.

It may be seen that the arrangement of Figure 10 may readily be adapted to a low-dropout regulator whose output is a single bandgap above the ground reference, simply by omitting (for example) QPH2, QPL2, QPH4, QPL4, QPH6, QPL6 and QPH8. The Emitter of QPH1 would then be connected to the Collector of QPH3, the Emitter of QPH3 to the Collector of QPH5, the Emitter of QPH5 to the Collector of QPH7, and the Emitter of QPH7 to the output.

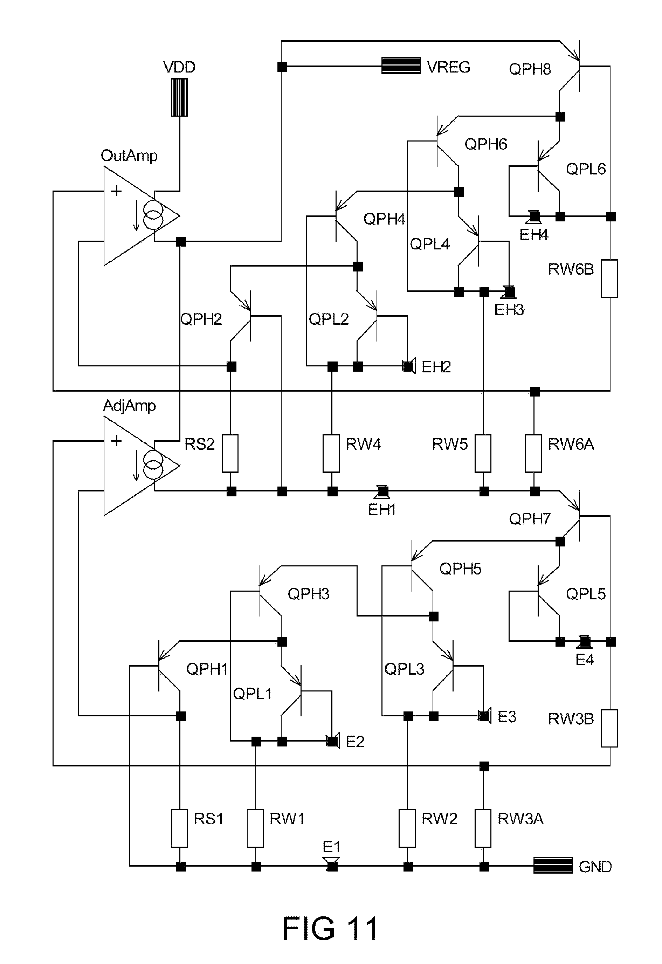

Figure 11 shows an arrangement wherein two single-height bandgap circuits as described based on figure 10 and as described in the previous paragraph are connected such that the bandgap Voltages appear in series. The illustrated arrangement can be suitable for use in a low dropout reference or regulator. Such an arrangement could be advantageous where the substrate currents of PNP Transistors might cause excess uncertainty in the values of currents with the arrangement of figure 10. Similarly, it would be helpful where the Voltage between the Collector and the Emitter of some Transistor is likely to become too low when the configuration of figure 10 is used, for example when operating at very high temperature or when a very large area ratio is used.

It will be apparent that either or both of the single-height bandgap sections in the arrangement of figure 11 may be replaced by the two-bandgap circuit of figure 10 to generate multiple-bandgap outputs. Note that the amplifier AdjAmp that is used to adjust the set current in QPH1 towards its nominal value may not always be required.

Clearly, stacking arrangements analogous to figure 11 may be developed for the majority of PTAT, reference, or regulator arrangements according to this invention. These would generally allow the bulk of the current used in each stacked section to be available for use in the other sections.

The arrangements of figures 3 to 11 are able to provide noise performance that is more than competitive with prior art at all frequencies. However, the methods and arrangements of this patent allow flicker noise to be further reduced, albeit at the expense of some increase in the fundamental flatband noise.

It is known that the majority of flicker noise in bipolar transistors is due to random variation in the base current. Based on this knowledge, if we consider the arrangement of figure 11, we can see that the base current of QPH1 forms a part of the collector currents of QPH3, QPH5, and QPH7. Similarly, the base currents of QPH3, QPH5, and QPH7 are subtracted from their respective collector currents. Flicker noise in any of these base currents thereby contributes to the output flicker noise of the circuit.

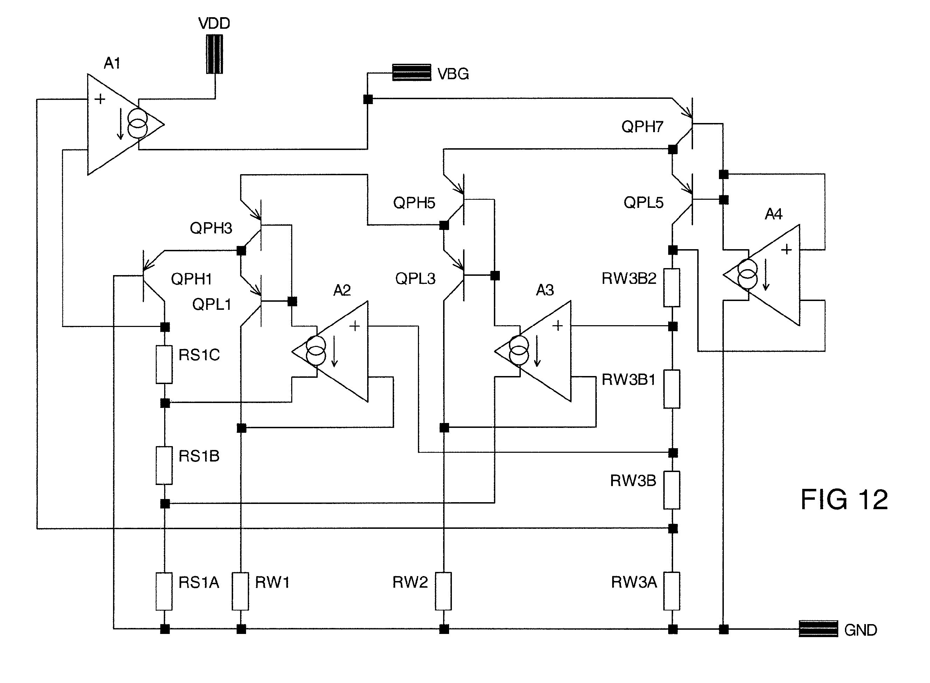

Figure 12 shows an arrangement whereby circuits based on figure 11 may be made insensitive to the base currents of QPH3, QPH5 and QPH7. The method is explained in terms of the base current of QPH3, which is routed to QPH5 via the emitter of QPH3 and from QPH5 to QPH7 via the emitter of QPH5. Amplifier A2 extracts this base current from part of the resistor chain RS1 that is used to provide current to the collector of QPH1, reducing the current through QPH1 and thus through all of QPH3. QPH5 and QPH7. If the base resistance of QPH3 is known, the level of this compensation can be set so that the impact of the base current of QPH3 is negligible. The same principle applies to compensation of the base current of QPH5, and can also be applied to the base current of QPH7, although this is not shown here, as the effect can be relatively small as the conversion of this base current only occurs in the base resistance of QPH7. This leaves the effects of the base currents in QPL1, QPL3, and QP5 only partially compensated, but the low current density in these transistors means that their contribution is already relatively small. More significantly, the base current of QPH1 remains uncompensated in this arrangement.

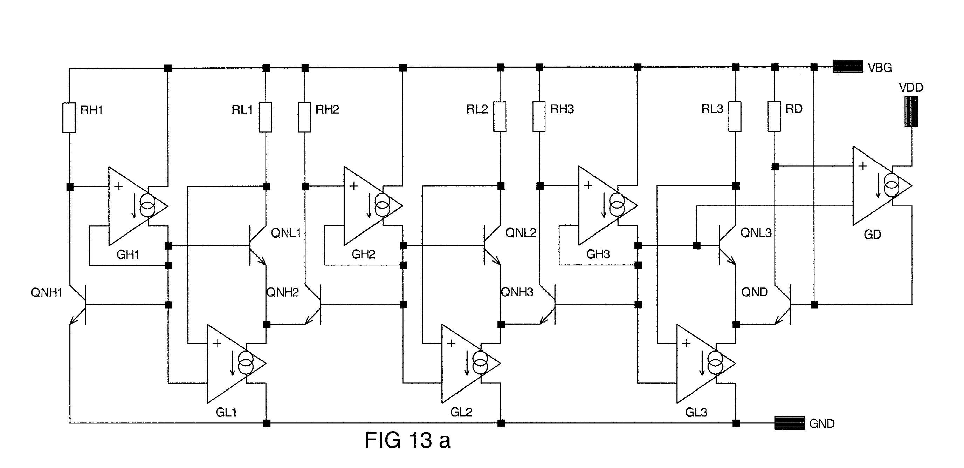

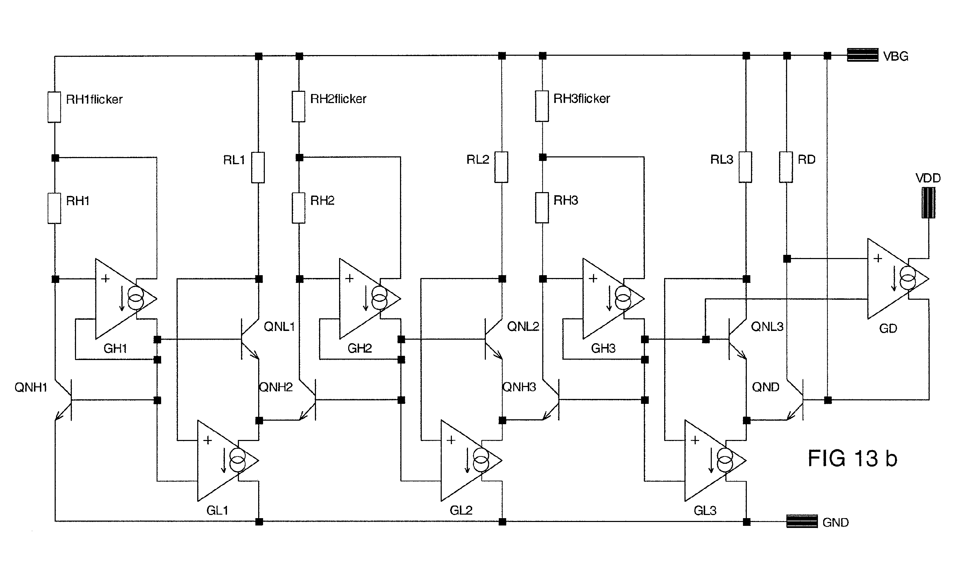

Figure 13a shows a circuit according to the invention where the collector current of each drawn transistor is substantially independent of the base-emitter current. For this circuit the primary source of flicker noise is the IR product of the base current and the base resistance of each transistor. In so far as the value of the base resistance is known, this may be ameliorated using techniques equivalent to those figure 12, as shown in figure 13b. As before, it is generally not practical to compensate the effect of a device whose base is connected to the band-gap output, but in this case the residual noise can be relatively small.

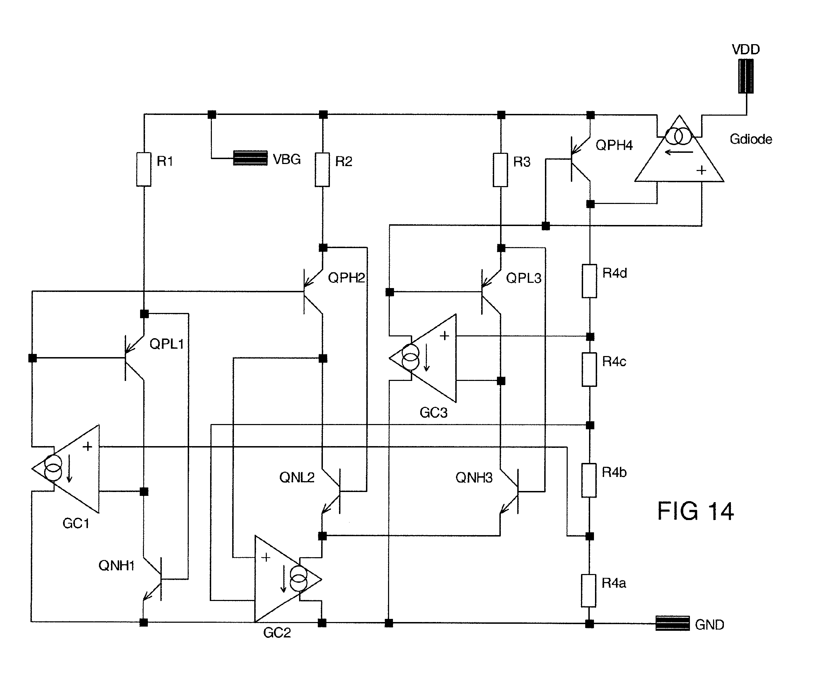

One disadvantage of the circuits of figures 13 is that the available current is split between a relatively large number of devices - seven as shown. Figure 14 shows how complementary transistors may be used to maintain relatively high current density while avoiding the passage of base current through the collectors of the transistors. The base current noise due QPH2 may be compensated using techniques akin to those of figure 12.

In considering these embodiments of the invention, it should be noted that the specific arrangements and especially the control feedback arrangements are presented purely for the purposes of illustrating the invention, and that many further variants will be possible.

In any of the described embodiments of the invention, it is possible to multiply the generated PTAT Voltage using resistor-amplifier arrangements. Although this is inevitably noisier than the basic form of the invention, it may be desirable in order to contain the total transistor area that would otherwise be required to generate the required output Voltage.

It will be noted from the foregoing description that the invention can provide various advantages over the prior art, some of which are listed below:
- Embodiments of the invention can operate with supply Voltages that are substantially lower than required by Hilbiber's arrangement;
- Regulator designs may be substantially less sensitive to the effects of flicker (or 1/f) noise in the Base Current than prior art;
- Improved noise performance can be achieved as compared with Widlar and Dobkin's or Brokaw's designs while using a single Polarity of Transistor;
- Embodiments of PTAT Voltage sources or bandgap Voltage references can utilise lateral transistors that exhibit substantial substrate currents and/or exhibit mismatches between the beta of the Transistors, with the specific potential to provide low-noise band-gap regulators that are suitable for use with standard CMOS circuitry;
- The regulated output Voltage that can be relatively insensitive to resistor mismatch;
- A simple trade-off can be achieved between output noise and power dissipation that can readily be adjusted in the field; and
- The circuit can be inherently insensitive to the current gain of the bipolar transistors, which last simplifies the use of transistors with different beta.

## Claims

1. A circuit for use in a Voltage source or a proportional to absolute temperature sensor or in a bandgap regulator, the circuit comprising
a first PTAT Voltage source comprising at least a first Transistor and a second Transistor that is operated at a Current Density that is low compared with the Current Density in the first Transistor, the first and second Transistors being connected so that the difference between the Base-to-Emitter potential differences of the said transistors comprises at least part of the first PTAT Voltage, and
a second PTAT source comprising at least a third Transistor and a fourth Transistor that is operated at a Current Density that is low compared with the Current Density in the third Transistor, the third and fourth Transistors being connected so that the difference between the Base-to-Emitter potential differences of the said transistors comprises at least part of the second PTAT Voltage,
the first and second PTAT Voltage sources being interconnected such that a Voltage signal is generated that comprises the sum of the PTAT Voltages generated by the two PTAT sources,
wherein the potential of either the Emitter or the Base of the third or fourth Transistor lies between the potentials of the Emitter and the Base of the first Transistor.

2. A circuit as claimed in claim 1, wherein the first PTAT Voltage is developed between the Emitters of the first Transistor and of the second Transistor, and the second PTAT Voltage is developed between the Emitters of the third Transistor and of the fourth Transistor, and the emitters of the second Transistor and the third Transistor are connected, such that the PTAT output includes the sum of the Voltage between the Emitters of the first and the second Transistors and the Voltage between the Emitters of the third and Fourth Transistors.

3. A circuit as claimed in claim 2, in which the Collector of the first Transistor is connected to the Emitter of the second Transistor.

4. A circuit as claimed in any of claims 1 to 3, wherein the first, second, third and fourth Transistors are of the same Polarity.

5. A circuit as claimed in any of claims 1 to 4, wherein the generated PTAT Voltage is multiplied using resistor-amplifier arrangements.

6. A circuit as claimed in claim 1, wherein substantially all the current passing through the emitter-collector path of the transistors of the first PTAT circuit passes through the emitter-collector path of at least one of the transistors of the second PTAT circuit.

7. A circuit according to any of claims 2 to 6, wherein the Transistors are intrinsic to a standard CMOS process
